# EUROPEAN PATENT SPECIFICATION

(11) **EP 3 132 164 B1**
(45) Date of publication and mention of the grant of the patent: **15.04.2020**
(21) Application number: 15722565.7
(22) Date of filing: 16.04.2015
(51) Int. Cl.: F16K 1/22, F02M 25/00, F02D 9/06, F02D 9/10, F16K 27/02, F02M 26/26, F02M 26/70

(54) **VALVE BLOCK SEAL ARRANGEMENT**
DICHTUNGSANORDNUNG FÜR VENTILBLOCK
AGENCEMENT DE JOINT D'ÉTANCHÉITÉ DE BLOC DE VANNE

(30) Priority: 16.04.2014 GB 201406882
(43) Date of publication of application: 22.02.2017
(73) Proprietor: GT Emissions Systems Limited, Whitehouse Business Park Peterlee Durham SR8 2RU (GB)
(72) Inventor: GIBSON, Collin, Peterlee Durham SR8 2RU (GB); PENNICK, Nigel, Peterlee Durham SR8 2RU (GB); CRAIG, Steven, Peterlee Durham SR8 2RU (GB); ROWE, Ellis, Peterlee Durham SR8 2RU (GB)
(74) Representative: McWilliams, David John
(86) International application number: PCT/GB2015/051159
(87) International publication number: WO 2015/159093

(56) References cited:
- EP-A2- 1 493 951
- EP-A2- 2 574 767
- WO-A1-2006/003017
- GB-A- 2 203 821

## Description

### TECHNICAL FIELD

This disclosure relates to a seal arrangement for reducing leakage of gases via an operating spindle of a valve block, for example in a butterfly valve, when controlling the passage of hot gases through a duct.

### BACKGROUND TO THE INVENTION

Valves, such as butterfly valves, are used to control the passage of exhaust gases from internal combustion engines. Such valves may be used, for example, in exhaust brakes, thermal management systems, waste heat recovery systems, exhaust gas recirculation (EGR) valves and EGR bypass valves.

A particular problem in such valves is the potential for leakage of exhaust gas via the operating spindle of the valve. The present invention provides a novel solution by which such leakage can be better controlled and/or eliminated.

Examples of known valve systems are disclosed in EP1493951, WO2006/003017 and GB2203821.

### SUMMARY OF THE INVENTION

According to a first aspect of the invention, there is provided a butterfly valve comprising a housing having a through bore, a spindle crossing said through bore and pivotable in said housing, and a valve disc secured to said spindle for closing said through bore, said spindle protruding at one side for connection to an operating lever, wherein said housing includes a through bearing for said spindle at said one side, and said spindle includes a circumferential groove adjacent said bearing, said bearing comprising a radially inner part and a radially outer part defining therebetween a circumferentially extending space about said spindle, and said valve further comprising a sealing ring engaged in said groove and axially slidable in said space to permit said valve disc to self-centre in use.

Such a valve provides a sealing ring within the envelope of the valve body, rather than externally, and is effective in preventing the passage of gas via the necessary clearance between the spindle and spindle bearing. The area of the sealing faces is increased, and the arrangement provides a labyrinthine path for a potential escape of gas; furthermore the provision of machined surfaces can provide for better sealing.

In one embodiment, said sealing ring comprises a split ring of resilient material, said ring being adapted to open over said spindle for entry into said groove. The ring may have a substantially square or rectangular section. The ring may be of stainless steel.

Alternatively, the sealing ring comprises a ring split into semi-circular portions, said portions being in intimate contact in said groove, in use, and may comprise hinged semi-circular portions having free ends with a tongue and groove engagement.

The semi-circular portions may be of stainless steel.

In one embodiment, the groove has shoulders substantially orthogonal to the axis of said spindle, and said sealing ring is a close sliding fit therein.

The space may be defined in the outer bearing part, and the inner and outer bearing parts may have a common outside diameter. The inner and outer bearing parts may together be a gas tight interference fit in said housing.

In one embodiment, said space has an axial dimension less than twice the width of said groove. In an embodiment, said space provides for axial movement equal to the width of said sealing ring or less.

Preferably, the valve includes a blind bearing in the other side of said body, said blind bearing supporting a non-protruding end of said spindle.

In one embodiment, the valve comprises an external operating lever fixed for rotation with said spindle, an outer washer being inboard of said lever and fixed for rotation with said spindle, an inner washer being inboard of said outer washer, said inner washer being fixed for rotation with said spindle and slidable axially thereof, and a spring urging said washers apart.

The outer washer may be slidable with respect to said spindle, and may bear directly on said lever.

The inner washer may bear directly on said housing.

The spring may be a coiled compression spring.

The inner washer may include an axially extending annulus to locate the bore of said spring. The inner washer may be generally u-shaped in cross-section. The inner washer may include axially projecting arms, such that the operating lever locates between the arms, and is fixed for rotation with the inner washer due to the arms. The spindle may include a flat thereon, and said inner and outer washers may have 'D' shaped apertures for location on said flat. The operating lever may have a 'D' shaped opening for engagement with said flat.

Such an arrangement provides for rotational engagement of the lever and washers, but any non-rotational form may suffice (such as a square or hexagonal spindle end).

A second aspect of the invention provides a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft,;
first and second seal elements located within the recess for creating a seal between the bush and the shaft; and
a biasing element located within the recess, intermediate the first and second seal elements,
wherein the biasing element is configured to expand axially, to apply opposite forces to the first and second seal elements.

The arrangement set forth contributes to the elimination of possible leakage paths along the bore.

The recess may have opposing upper and lower surfaces, and axial expansion of the biasing element serves to create a seal with the upper and lower surfaces.

Axial expansion of the biasing element may urge the first and second elements into contact with the upper and lower surfaces of the recess.

Further seal elements may be included in the recess adjacent the first and second elements, such that the seal elements are arranged in pairs, with the biasing element intermediate the pairs of seal elements.

The first and second seal elements may be biased radially inwardly, so that the first and second seal elements engage an external surface of the shaft to create a seal with the shaft.

The radial biasing of the seal elements urges them towards the external surface of the shaft, so a strong axial seal can be formed between the engaging surfaces.

The valve block may further comprise third and fourth seal elements within the recess, wherein the third and fourth seal elements are biased radially inwardly, so that the third and fourth seal elements engage the external surface of the shaft to create a seal with the shaft, and wherein the third and fourth seal elements are driven into sealing engagement with a respective portion of the recess under influence of the biasing element..

The first and second seal elements may be biased radially outwardly, so that the first and second seal elements engage an internal surface of the bush to create a seal with the bush.

The valve block may further comprise third and fourth seal elements within the recess, wherein the third and fourth seal elements are biased radially outwardly, so that the third and fourth seal elements engage the internal surface of the bush to create a seal with the bush, and wherein the third and fourth seal elements are driven into sealing engagement with a respective portion of the recess under influence of the biasing element..

The bush may comprise a top portion and a bottom portion, the recess being defined between the top and bottom portions of the bush.

The bush may comprise a top portion and a bottom portion, the recess being defined in the bottom portion of the bush.

The shaft may comprise at least one further recess, at least one further seal element being located within the further recess, wherein the further seal element is biased radially outwardly so that the further seal element engages an internal surface of the bush to create a seal with the bush.

The recess may be in the shaft.

The bush may comprise at least one further recess, and at least one further seal element is located within the further recess, wherein the further seal element is biased radially inwardly so that the further seal element engages an external surface of the shaft to create a seal with the shaft.

The bush may comprise a top portion and a bottom portion, wherein the top portion and the bottom portion of the bush are arranged to engage one another to limit relative axial movement of the top and bottom portions, in use.

The biasing element may be a wave spring.

The seal elements may be sealing rings.

The seal elements may have flat top and bottom surfaces, for engaging corresponding surfaces of the recess to create a seal.

The seal elements may have rounded internal and external surfaces, for engaging corresponding surfaces of the bush and/or the shaft.

A third aspect of the invention provides a method of assembling a valve block for use in an exhaust gas stream, the method comprising:
providing a valve pivotable between an open and a closed position;
providing a spindle in communication with the valve, the spindle comprising a shaft that is rotatable within the housing, for pivoting the valve between the open and closed position;
locating the shaft within a bore extending within the valve block;
locating a bush within the bore to encircle the shaft, a recess being defined between the bush and the shaft;
locating first and second seal elements within the recess; and
locating a biasing element within the recess, intermediate the first and second seal elements,
wherein the biasing element expands axially to apply a force to the first and second seal elements.

The first and second seal elements may be biased radially inwardly so that the first and second seal elements engage an external surface of the shaft to create a seal.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft; and
first and second seal elements located within the recess,
wherein the first and second seal elements are biased radially inwardly, so that the first and second seal elements engage an external surface of the shaft to create a seal with the shaft.

The bush may comprise a top portion and a bottom portion, and the recess is defined between the top and bottom portions of the bush, to define an upper surface of the recess on the top portion of the bush, and a lower surface of the recess on the bottom portion of the bush.

The valve block may further comprise a biasing element located within the recess, intermediate the first and second seal elements, wherein the biasing element is configured to expand axially, to apply opposite forces to the first and second seal elements.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft; and
first and second seal elements located within the recess,
wherein the recess is in the shaft, and the first and second seal elements are biased radially outwardly so that the first and second seal elements engage an external surface of the bush, to create a seal with the bush.

Upper and lower surfaces may be defined within the recess.

The valve block may further comprise a biasing element located within the recess, intermediate the first and second seal elements, wherein the biasing element is configured to expand axially, to apply opposite forces to the first and second seal elements.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft;
first and second seal elements located within the recess; and
third and fourth seal elements located within the recess,
wherein the third and fourth seal elements are biased radially inwardly so that the third and fourth seal elements engage the external surface of the shaft, to create a seal with the shaft.

The bush may comprise a top portion and a bottom portion, and the recess is defined between the top and bottom portions of the bush, to define an upper surface of the recess on the top portion of the bush, and a lower surface of the recess on the bottom portion of the bush.

The valve block may further comprise a biasing element located within the recess, intermediate the first and second seal elements, wherein the biasing element is configured to expand axially, to apply opposite forces to the first and second seal elements.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft, the recess being in the bottom portion of the bush;
first and second seal elements located within the recess; and
third and fourth seal elements located within the recess,
wherein the third and fourth seal elements are biased radially inwardly so that the third and fourth seal elements engage the external surface of the shaft, to create a seal with the shaft.

The valve block may further comprise a biasing element located within the recess, intermediate the first and second seal elements, wherein the biasing element is configured to expand axially, to apply opposite forces to the first and second seal elements.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft;
first and second seal elements located within the recess; and
third and fourth seal elements located within the recess,
wherein the recess is in the shaft, and the first, second, third and fourth seal elements are biased radially outwardly so that the first, second, third and fourth seal elements engage an external surface of the bush, to create a seal with the bush.

Upper and lower surfaces may be defined within the recess.

The valve block may further comprise a biasing element located within the recess, intermediate the first and second seal elements, wherein the biasing element is configured to expand axially, to apply opposite forces to the first and second seal elements.

According to an example not forming part of the present invention, there is provided a valve block for use in an exhaust gas stream, the valve block comprising:
a valve movable between an open and a closed position;
a spindle in communication with the valve, the spindle comprising a shaft that is rotatable within the valve block, for moving the valve between the open and closed position;
a bore extending within the valve block, for locating the shaft;
a bush, configured to act as a bearing for rotation of the shaft;
a recess defined between the bush and the shaft, the recess being in the shaft;
first and second seal elements located within the recess; and
at least one further recess in the bush, and at least one further seal element located within the further recess, wherein the further seal element is biased radially inwardly so that the further seal element engages an external surface of the shaft, to create a seal with the shaft,
wherein the first and second seal elements are biased radially outwardly so that the first and second seal elements engage an external surface of the bush, to create a seal with the bush.

Upper and lower surfaces may be defined within the recess.

The valve block may further comprise third and fourth seal elements within the recess that are biased radially outwardly so that the third and fourth seal elements engage an external surface of the bush, to create a seal with the bush.

The valve block may further comprise a biasing element located within the recess, intermediate the first and second seal elements, wherein the biasing element is configured to expand axially, to apply opposite forces to the first and second seal elements.

### BRIEF DESCRIPTION OF DRAWINGS

Fig. 1 illustrates a first embodiment of a butterfly valve according to a first aspect of the invention, in elevation;
Fig. 2 illustrates the valve of Fig. 1 in plan;
Fig. 3 is a perspective view of the valve of Fig. 1;
Fig. 4 is an exploded view of components of the valve of Fig. 1;
Fig. 5 is a cross-sectional view through the valve of Fig. 1;
Fig. 6 illustrates components of the valve butterfly and spindle of Fig. 1;
Fig. 7 is an enlarged cross-sectional view of the upper bearing of the embodiment of Fig. 1;
Fig. 8 corresponds to Fig. 7 and shows an alternative condition;
Fig. 9 shows an alternative sealing ring;
Fig. 10 shows another alternative sealing ring;
Fig. 11 illustrates a second embodiment of the invention in axial cross-section;
Fig. 12 is an exploded perspective view of a valve block according to a second aspect of the invention;
Fig. 13A is a cross-sectional view through a vertical plane of the assembled valve block of Figure 2;
Fig. 13B is a detail view of part of Fig. 13A, showing more detail of an upper seal arrangement;
Fig. 14A is a cross-sectional view of an alternative valve block;
Fig. 14B is a detail view of part of Fig. 14A, showing more detail of an upper seal arrangement;
Fig. 15A is a cross-sectional view of an alternative valve block;
Fig. 15B is a detail view of part of Fig. 15A, showing more detail of an upper seal arrangement;
Fig. 16A is a cross-sectional view of an alternative valve block;
Fig. 16B is a detail view of part of Fig. 16A, showing more detail of an upper seal arrangement;
Fig. 17A is a cross-sectional view of an alternative valve block; and
Fig. 17B is a detail view of part of Fig. 17A, showing more detail of an upper seal arrangement.

### DESCRIPTION OF EMBODIMENTS

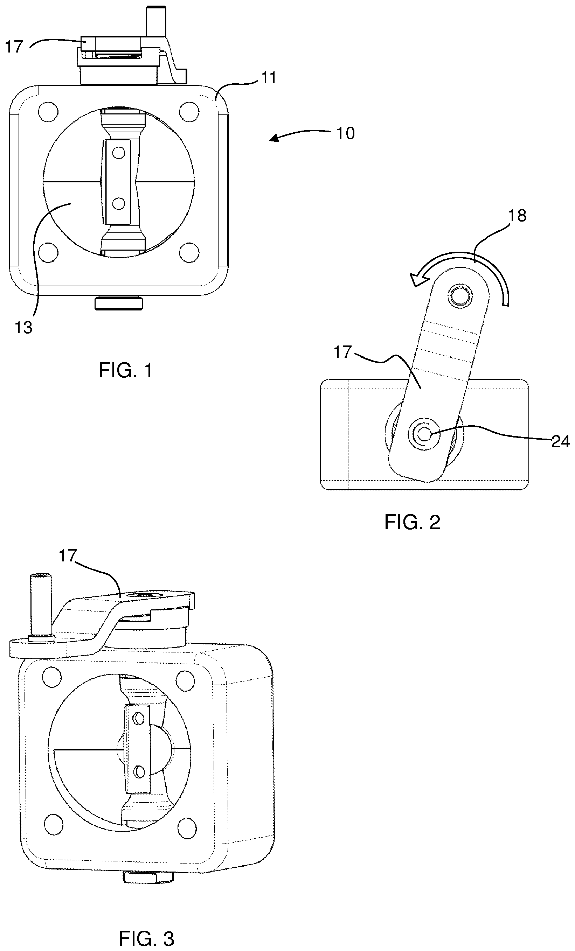

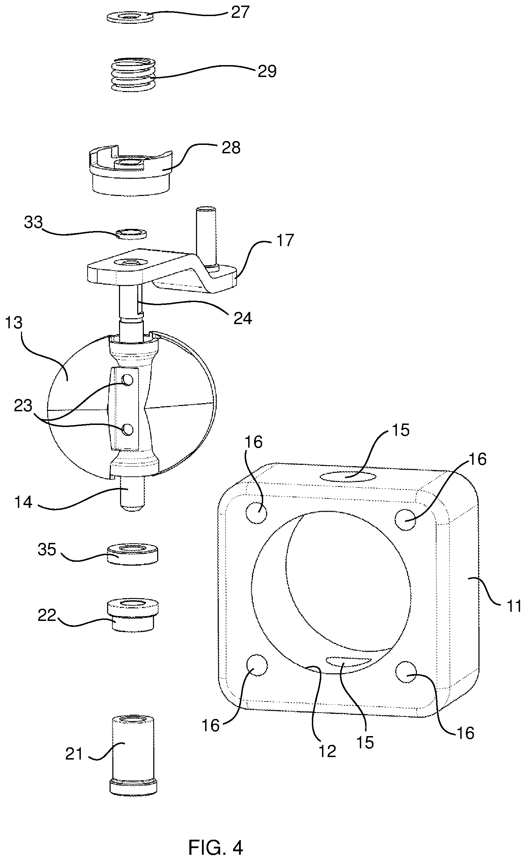

With reference to Figs. 1-6, a butterfly valve 10 comprises a valve housing 11 having a through bore 12 to receive a valve disc 13 mounted on a spindle 14. The valve body includes a transverse through bore 15 for an upper and a lower spindle bearing, and screw-threaded holes 16 (on both sides) to receive threaded bolts or studs whereby the valve is mounted to a fluid duct, such as an exhaust pipe of a vehicle. An external lever 17 is operable to pivot the valve disc 13, as represented by arrow 18. A butterfly valve, as described so far, is conventional and well known.

The lower spindle bearing comprises a blind bush 21, and is a gas-tight interference fit in the lower through bore 15 (as viewed). The upper spindle bearing includes a through bush 22, also sized for gas-tight interference fit, in the upper through bore 15.

The valve disc 13 is immovably attached to the spindle by screws or rivets (not shown), for which suitable apertures 23 are provided.

The upper part (as viewed) of the spindle 14 has a non-circular form provided by a machined flat 24. The lever 17 has a correspondingly shaped through hole 25 wherein operating torque can be transmitted, by for example an actuator or cable attached to a post 26 at the free end of the lever 17.

The flat 24 is sufficiently long to receive a plain washer 27, a u-shaped washer 28, and a coil compression spring 29. The washers 27, 28 have a 'D' shaped through hole 30, 31 to ensure that they turn with the lever 17 and spindle 14. The u-shaped washer 28 also has axially projecting arms 28a at its outer circumference. The arms 28a are spaced so that when the valve block is assembled, a portion of the lever 17 locates between the arms 28a to further help ensure the u-shaped washer 28 rotates with the lever 17 and spindle 14. The spring 29 is between the washers 27, 28, and in use urges them apart with a pre-load, as will be described.

By mounting the spring 29 between washers 27, 28 that turn with the spindle, twisting of the spring is obviated as compared with a spring that bears directly on the housing 11. The u-shaped washer 28 also ensures that the spring does not rub on the spindle during arcuate movement, thus reducing friction.

Inboard of the flat 24, the spindle is provided with a groove 32 within which is seated a sealing ring 33, which in use is housed within a circular recess 34 of an outer bush 35. The groove 32 and sealing ring 33 are of a mating shape, and preferably substantially square or rectangular in section. The ring 33 is a close fit in the groove 32.

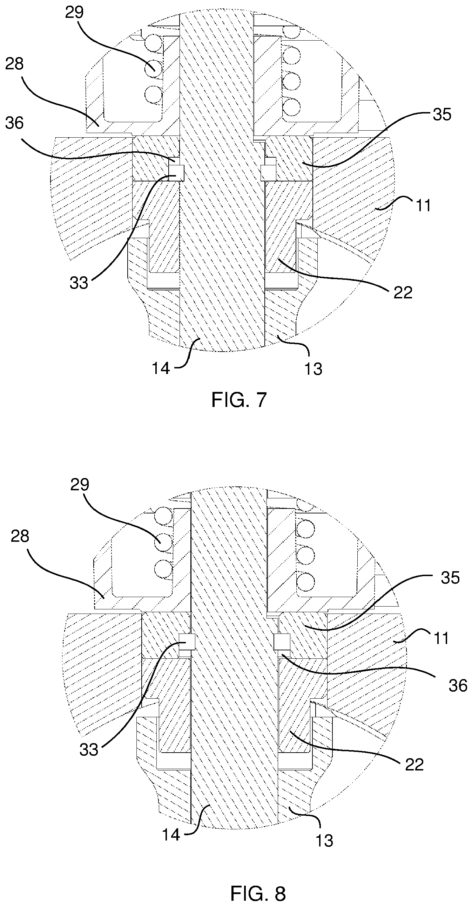

With reference to Fig. 7, the upper spindle bearing 22 and gas sealing ring 33 are illustrated in greater detail, it being understood that a gas seal for the lower end of the spindle is not necessary because the lower spindle bearing is a blind bush 21.

The inner bore of the upper bush 35 may constitute part of the upper spindle bearing, in conjunction with through bush 22.

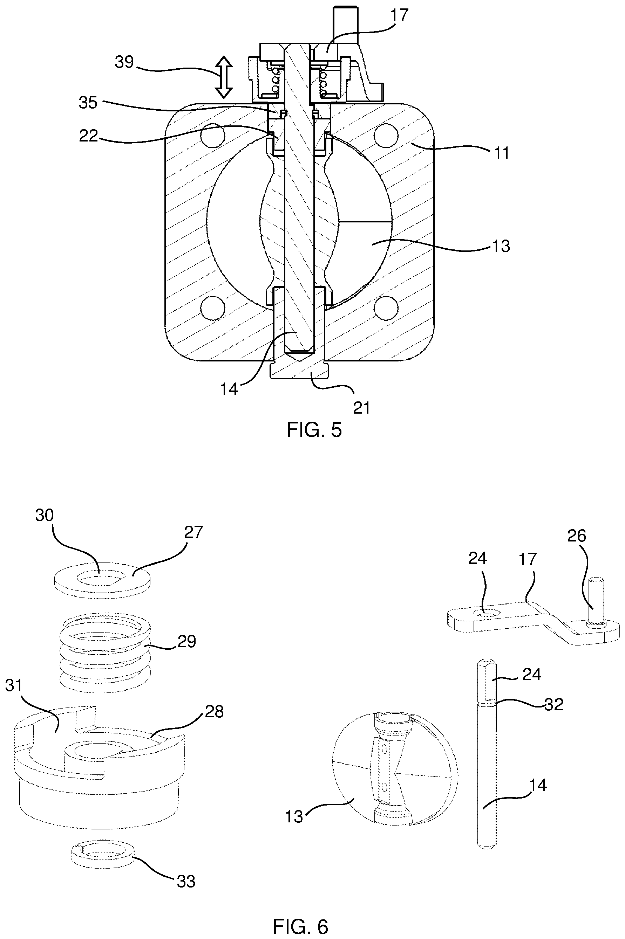

In use the upper bush 35 and through bush 22 constitute a split bearing and are an interference fit in the body 11; they are thus immovable in use. The sealing ring 33 is contained within an annular recess 36 defined about the spindle at the interface of the upper bush 35 and through bush 22. The sealing ring has a gap 37 which is substantially closed in the installed condition of Fig. 6.

The spring 29 exerts a preload on the u-shaped washer 28, which draws the spindle 14 upwardly with respect to the body 11; adequate axial clearance is provided in the recess 36 to accommodate such movement, so that the components may adopt the condition illustrated in Fig. 8, where a face seal is formed between the top of the sealing ring 33 (as viewed) and the inside face of the upper bush 35. The arrangement thus provides with appropriate dimensioning of components, both an axial and a radial gas seal, and allows for the butterfly valve disc 13 to self-centre within the through bore 12. Furthermore axial movement of the spindle can be accommodated in use, as represented by arrow 39 (Fig. 5).

Additionally, downward spring loading of the u-shaped washer 28 on to a flat machined surface of the housing 11 provides a secondary gas seal against the escape of gas past the sealing ring 33.

The materials of the valve of Figs. 1-8 are resistant to hot exhaust gases, and typically of metal. The body 11 may be cast iron, and other components of a suitable grade of steel. The spindle bearings may be brass or the like. In the illustrated embodiment, the sealing ring 33 may be of resilient stainless steel to permit assembly thereof over the spindle 14 and in to the groove 32, in the manner of a piston ring.

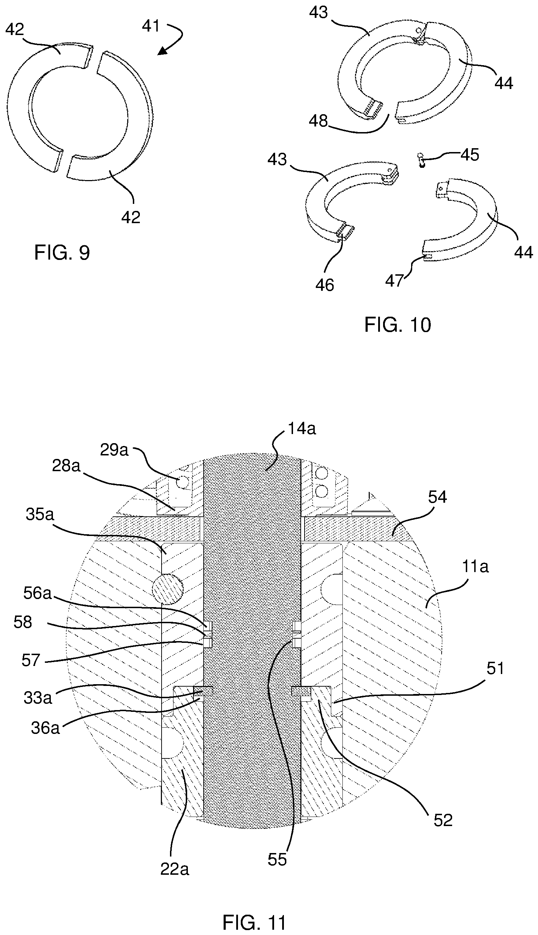

Figs. 9 and 10 illustrate that the sealing ring may alternatively be formed from separate parts so that resilience is not a required attribute. For example in Fig. 9 a two- part sealing ring 41 is provided, and comprising equal semi-circular portions 42. In Fig. 10 semi-circular portions 43, 44 are connected by hinge pin 45, and have an interlocking tongue 46 and groove 47 at the opening 48. The components of Figs. 9 and 10 may be formed by powder metallurgy techniques, such as sintering.

Fig. 11 illustrates an alternative embodiment in which additional sealing is provided about a spindle; features having a function common to the embodiment of Figs. 1-7 carry the same reference numeral with suffix 'a'.

In Fig. 11 the upper bush 35a has a depending annular lip 51 to define a circular recess for guiding and centralizing a circular projection 52 of an upper through bush 22a. The bush 22a contains a circular end recess 36a to define a space for axial movement of the sealing ring 33a due to end loading of the spring 29a. The u-shaped washer 28a bears on the body 11a via an intermediate plate 54.

As described so far, the function of the sealing ring 33a is as previously explained.

Inboard of the spindle groove 32a, a second groove 55 is provided, containing secondary sealing rings 56, 57 urged apart by a wave spring 58. The sealing rings 56, 57 are identical, but need not be, and are typically in the form of a piston ring with a single split to facilitate closure thereof.

The second rings provide axial and radial gas seals in the event of upward passage of gas (as viewed) between the spindle 14a and the upper spindle bearing 22a.

The drawings depict the embodiment of Figs. 1-7 in one orientation with a horizontal through passage and operating lever uppermost; any orientation is of course permissible, for example with the lever at the side or underneath.

Typically dimensions for an exhaust gas valve are a through bore for gas in the range 40-120mm, and spindle diameter in the range 6-20mm.

In the embodiments, a single sealing ring 33, 33a is described; however a plurality of such rings may be provided side by side on the spindle, and the space 36 may be dimensioned accordingly to permit self-centring of the valve disc 13.

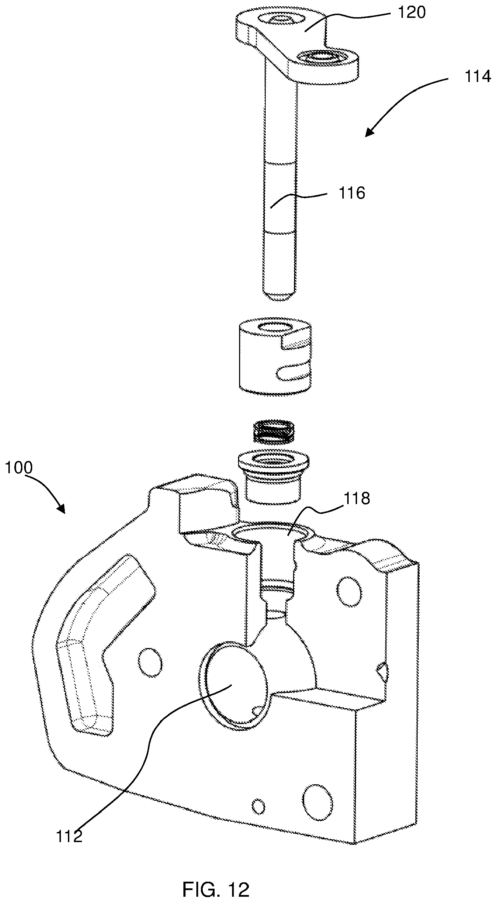

Referring now to Fig. 12, an alternative valve block is indicated generally at 100. Like the valve blocks of Figs. 1 to 11, the valve block 100 is intended for use in an exhaust gas stream, for example, as part of an exhaust gas recirculation (EGR) valve system, exhaust braking system or waste heat recovery system. The valve block 100 includes a valve 112 that is pivotable between an open and a closed position, for restricting or permitting exhaust gases to pass through the valve block 100. The valve 112 can be of any appropriate type, for example, a butterfly valve or a ball valve. A spindle 114 is in communication with the valve 112, for pivoting the valve 112 between the open and closed positions. In this embodiment, the valve block has a bore 118 extending within the valve block 100, from a top surface of the valve block 100. The spindle 114 has a shaft 116, located in the bore 118, which is rotatable within the valve block 100, the shaft 116 being coupled with the valve 112, such that rotating the shaft 116 causes the valve 112 to pivot between the open and closed position. An operating handle 120 is in communication with the shaft, such that it is operable to rotate the shaft 116.

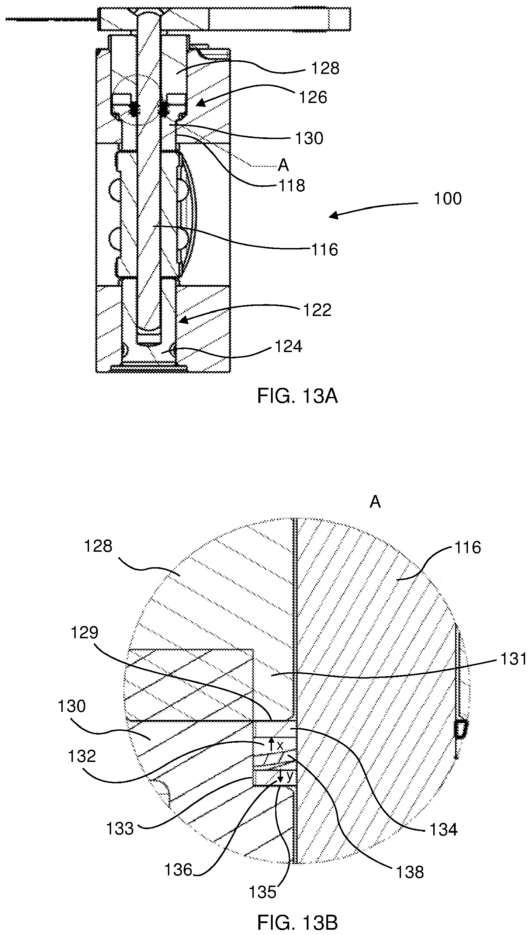

Looking now at Figs. 13A and 13B, lower and upper seal arrangements 122, 126 are included, for helping to prevent the leakage of gases through the bore 118 when the valve block 100 is in use. As can be seen most clearly in Fig. 13A, the lower seal arrangement 122 is typically a blind bush 124 that supports a bottom part of the shaft 16, to act as a bearing when the spindle 114 is rotated. The blind bush 124 is sized to have a gas-tight interference fit with the bore 118, to substantially prevent leakage of gases in use. In this embodiment, the upper seal arrangement 126 includes a composite bush consisting of upper and lower bushes 128, 130 that support a top part of the shaft 116, to act as a bearing when the spindle 114 is rotated. The upper and lower bushes 128, 130 are sized to have a gas-tight interference fit with a respective portion of the bore 118, to substantially prevent leakage of gases up through the bore, between the inner wall of the bore and the external walls of the bushes 128, 130, in use.

In this embodiment, the upper and lower bushes 128, 130 are arranged to define a recess 132 adjacent and circumferential to the shaft 116. In this embodiment, the lower bush 130 has a circumferential cut-out portion defining an axial surface 133 connected to a radial surface 135. The cut-out portion is configured to be concentric to the bore in use, such that the radial surface 135 is circumferential to the shaft in use. The upper bush 128 has an internal lip 131 arranged to be received within the cut-out portion of the lower bush 130. Adjacent surfaces of the lip 131 of the upper bush and the axial surface 133 of the lower bush 130 are arranged to be secured to one another, to limit relative axial movement of the upper and lower bushes 128, 130. They could be secured with a threaded engagement, adhesive, or any other appropriate arrangement.

The internal lip 131 of the upper bush 128 has a bottom surface 129 which is arranged to oppose the radial surface 135 of the lower bush 130. Therefore, the recess 132 is defined between the axial surface 133 of the lower bush 130, the radial surface 135 of the lower bush 130, the bottom surface 129 of the upper bush 128, and the shaft 116.

First and second seal elements 134, 136 are located within the recess 132 formed between the upper and lower bushes 128, 130. In this embodiment, the first and second seal elements 34, 36 are 'inspringer' sealing rings, i.e. sealing rings configured to engage the shaft 116, to help create a seal, e.g. by being biased inwardly towards the shaft.

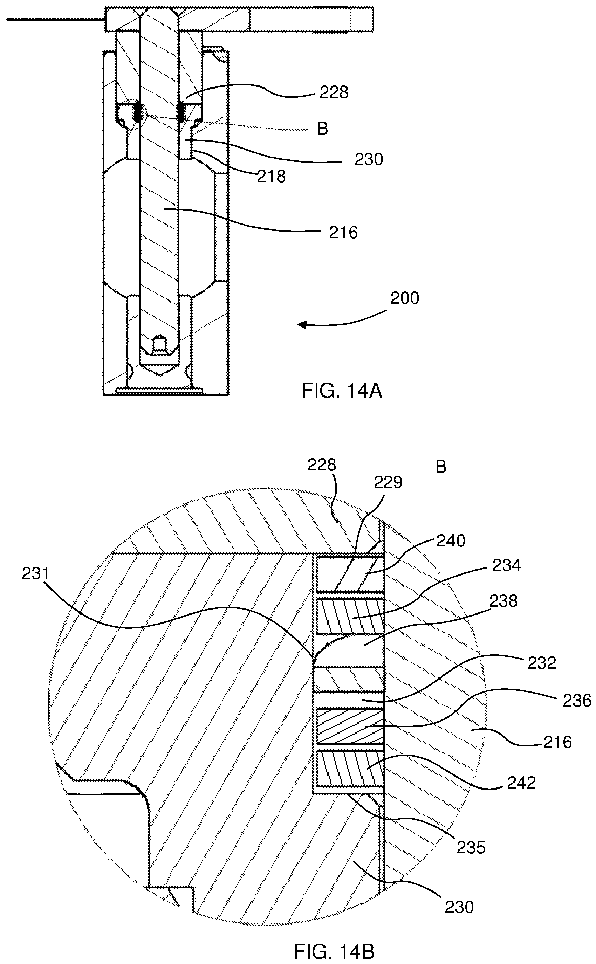

A biasing element 138 is also located within the recess 132, intermediate the first and second seal elements 134, 136. In this embodiment, the biasing element 138 is a wave spring. The biasing element 138 is configured to expand, such that it applies opposite forces to the first and second seal elements 134, 136 in the axial direction, relative to the shaft 116. The expansion of the biasing element 138 causes the second seal element 136 to push against the radial surface 135 of the lower bush 130 (shown in Fig. 13B as arrow 'y') and causes the first seal element 134 to push against the bottom surface 129 of the upper bush 128 (shown in Fig. 14B as arrow 'x'), to help form a seal within the recess 132, for substantially preventing leakage of exhaust gases through the bore 118.

In use therefore, the flat circumferential surfaces of the bottom surface 129 and the radial surface 135 are engaged by the seal elements. As described in more detail below, the seal elements have flat top and bottom surfaces that correspond to the bottom surface 129 and the radial surface 135, so a radial seal is created when these surfaces engage one another. The axial surface 133 corresponds to a rounded external surface of the seal elements (as described below), to create an axial seal when these surfaces engage one another. In this embodiment, this arrangement helps to ensure that the seal elements are engaged on at least two of their faces, to help form a strong seal, i.e. each seal element has a radial seal (e.g. between a top face of the seal element and a radial surface of the recess), and an axial seal (e.g. between an inner face of the seal element and an external surface of the shaft). The faces of the seal elements are described in further detail below.

Alternative arrangements of the valve block 100 are shown in the remaining figures. The same radial and axial sealing concepts apply. Equivalent features are indicated by like reference numerals, but with the suffix '200'.

As illustrated in Figs. 14A and 14B, the valve block 200 has a recess 232, which is defined between the upper and lower bushes 228, 230. In this embodiment, the upper and lower bushes 228, 230 are not secured to one another to limit relative axial movement; the bottom surface 229 of the upper bush 228 simply abuts the top face of the lower bush 230. In this embodiment, the upper bush 228 does not have an internal lip; the bottom surface 229 is a planar surface that extends across the entire bottom end of the upper bush 228.

In this case, the recess 232 is dimensioned to extend along a greater axial length than the recess 132 of Figs. 13A and 13B, such that it can also include third and fourth seal elements 240, 242 in addition to the first and second seal elements 234, 236 and the biasing element 238. The third and fourth seal elements 240, 242 are located axially external the first and second seal elements 234, 236, such that the third and fourth seal elements 240, 242 engage the bottom surface 229 of the upper bush 228 and the radial surface 235 of the lower bush, respectively. The biasing element 238 expands to push the first seal element 234 against the third seal element 240, and to push the second seal element 236 against the fourth seal element 242, to help form a seal within the recess 232, for substantially preventing leakage of exhaust gases through the bore 218. The first, second, third and fourth seal elements 234, 236, 240, 242 are 'inspringer' sealing rings that engage the outer surface of the shaft to help form the seal, e.g. by being biased inwardly towards the shaft.

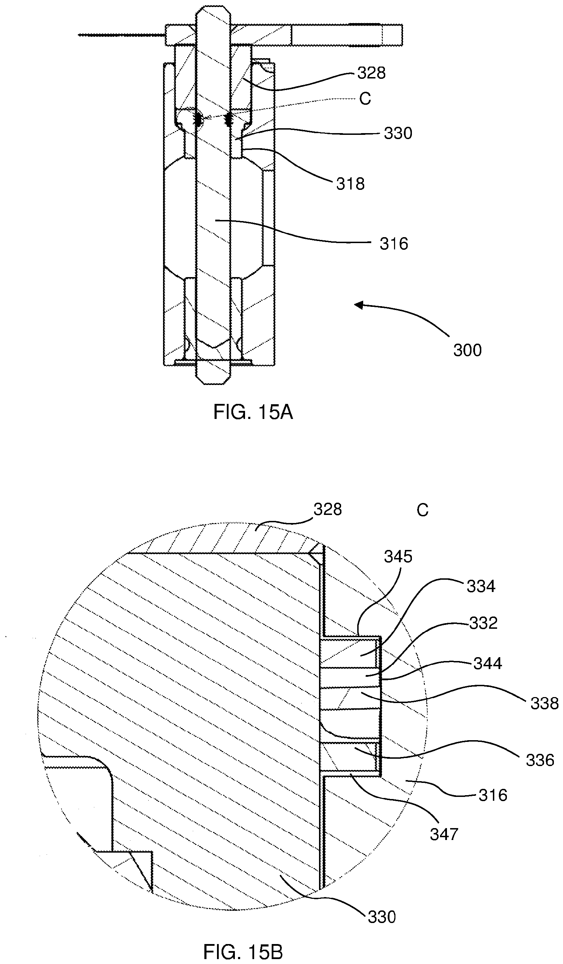

As illustrated in Figs. 15A and 15B, like Figs. 14A and 14B, the upper and lower bushes 228, 230 are not secured to each other; the adjacent surfaces abut one another. In this embodiment, the shaft 316 has a circumferential groove 344, and the lower bush 330 has a continuous internal surface, such that the recess 332 is defined between the internal surface of the bush 330 and the groove 344 of the shaft 316. The first and second seal elements 334, 336 are located either side of the biasing element 338, which expands to apply an axial force to the first and second seal elements 334, 336 to push them against top and bottom radial surfaces 345, 347 of the groove 344. However, in this case, the first and second seal elements 334, 336 are 'outspringer' sealing rings, i.e. the sealing rings are configured to engage the internal surface of the bush 330 to form a seal within the recess 332, e.g. by being biased radially outwardly towards the internal surface of the bush 330.

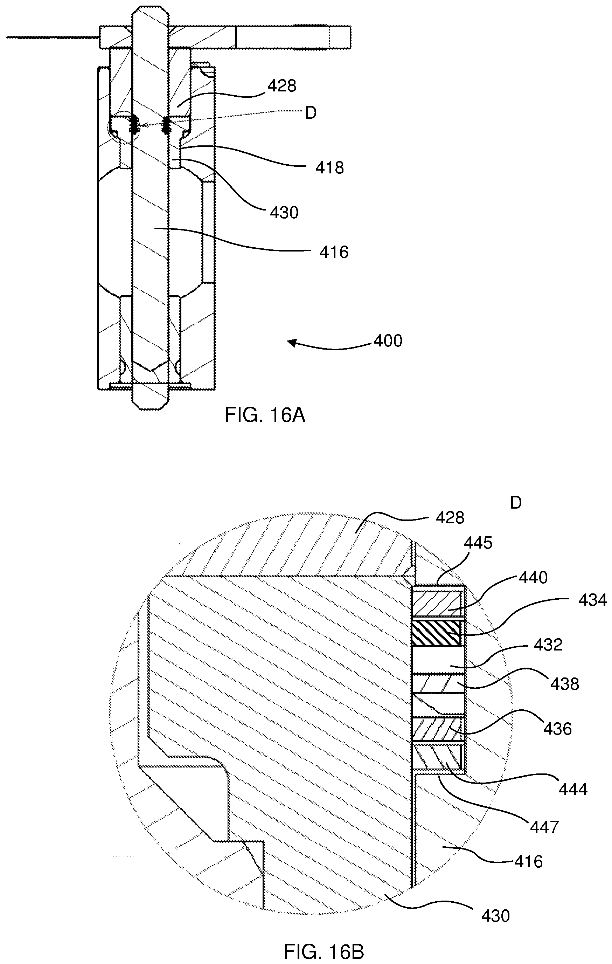

In Figs. 16A and 16B, the circumferential groove 444 extends along a greater axial length of the shaft 416 than the groove 344 of Figs. 15A and 15B, such that the recess 432 of the shaft 416 is dimensioned to also include third and fourth seal elements 440, 442, in addition to the first and second seal elements 434, 436 and the biasing element 438. The first, second, third and fourth seal elements 434, 436, 440, 442 are configured to engage the internal surface of the bush 430 to form a seal within the recess 432, e.g. by being 'outspringer' sealing rings.

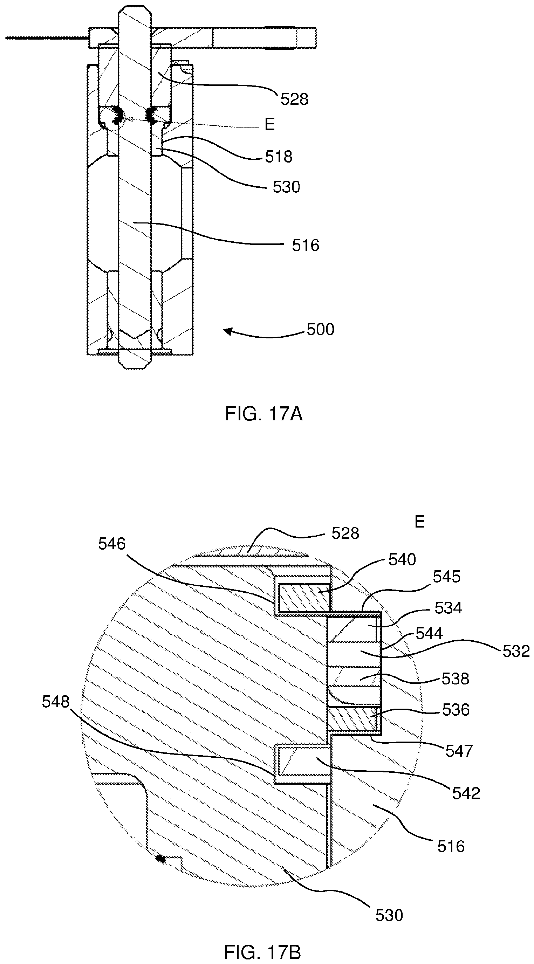

In Figs. 17A and 17B, the arrangement is as shown in Figs. 16A and 16B, except the third and fourth seal elements 540, 542 are instead configured to engage the external surface of the shaft 516 to form a seal, e.g. by being 'inspringer' sealing rings. To locate the third and fourth seal elements 540, 542, the lower bush 530 includes first and second circumferential grooves 546, 548. The first and second circumferential grooves 546, 548 are arranged to be opposite a smooth external surface of the shaft 516, i.e. axially either side of the groove 544, such that the third and fourth seal elements 540, 542 engage the external surface of the shaft 516 to form a seal, e.g. by having corresponding rounded surfaces. A combination of seal elements, e.g. 'inspringer' and 'outspringer' sealing rings, forms a strong seal within the bore 518 of the valve block 510, as exhaust gases are limited from escaping by the tortuous exit path they must take. Although not shown in the figures, in alternative embodiments the shaft could include circumferential grooves arranged to be opposite a smooth external surface of the bush. The inclusion of at least one circumferential groove (in addition to the recess) enables the valve block to have a combination of 'inspringer' and 'outspringer' seal elements, whether the groove is in the shaft or in the bush.

In the embodiments above, the seal elements, i.e. the first, second, third, and fourth seal elements, are rings. The seal elements have smooth external faces to help form a seal with the adjacent surfaces of the components of the valve block, when the seal elements are located in the valve block. The external faces of the seal elements (i.e. the radially inner and outer faces, as well as the top and bottom faces) are configured to be complementary to the surface they will engage in use, to help ensure a strong seal is formed. For example, the inner and outer faces are rounded, so they correspond to the external surface of the shaft and the internal surface of the lower bush (or recess, depending on the arrangement). The top and bottom faces are flat, so they correspond to the radial surfaces of the recess in which the sealing elements sit (i.e. the recess that is located in the lower bush, shaft, or between the upper and lower bushes, depending on the arrangement). For example, in Figure 12B, the flat top surface of the first sealing element 134 engages the flat bottom surface 129 of the upper bush 128.

In the embodiments described, the external surface of the shaft is rounded for its entire circumference, but could have a flat portion arranged to correspond a flat portion of the sealing elements. Typically, the shaft diameter is in the range of 4 to 35mm, i.e. it is a small shaft diameter, which works particularly well with the sealing arrangement of the present invention. The seal elements are typically metallic, e.g. of stainless steel.

The materials making up the valve blocks of Figs. 12 to 17B are resistant to hot exhaust gases, and typically of metal. For example, the sealing elements could be stainless steel, and the bushes could be brass.

Although the invention has been described above with reference to one or more preferred embodiments, it will be appreciated that various changes or modifications may be made without departing from the scope of the invention as defined in the appended claims.

Any combination of 'inspringer' or 'outspringer' type elements can be used. The number of seal elements used can also be varied and still remain within the scope of the invention. For example, the first and second seal elements could be 'outspringer' seal elements and the third and fourth seal elements could be 'inspringer' seal elements. Fifth and sixth seal elements could also be included, e.g. additional 'inspringer' or 'outspringer' seal elements. Using a combination of seal element types will increase the number of individual seals within the valve block, helping to better prevent the escape of gases through the bore.

Although in the above embodiments the recess is in either the bush or the shaft, the recess could extend across both. In this case, the upper and lower surfaces, of which the sealing elements are driven against in use, will be in both the bush and the shaft.

The embodiments described above are typically intended for use in hot exhaust gas systems, but will also have applications in other valve systems, e.g. cool gas valve systems or liquid valve systems.

## Claims

1. A valve block (100) for use in an exhaust gas stream, the valve block (100) comprising:
a valve (112) movable between an open and a closed position;
a spindle (114) in communication with the valve (112), the spindle (114) comprising a shaft (116) that is rotatable within the valve block (100), for moving the valve (112) between the open and closed position;
a bore (118) extending within the valve block (100), for locating the shaft (116);
a bush (128, 130), configured to act as a bearing for rotation of the shaft (116);
a recess (132) defined between the bush (128, 130) and the shaft (116);
**characterised in that**:
first and second seal elements (134, 136) are located within the recess (132), for creating a seal between the bush (128, 130) and the shaft (116); and
a biasing element (138) is located within the recess (132), intermediate the first and second seal elements (134, 136),
wherein the biasing element (138) is configured to expand axially, to apply opposite forces to the first and second seal elements (134, 136).

2. The valve block (100) of claim 1, wherein the recess (132) has opposing upper and lower surfaces (129, 135) and axial expansion of the biasing element serves to create a seal with the upper and lower surfaces (129, 135).

3. The valve block (100) of claim 1 or claim 2, wherein axial expansion of the biasing element (138) urges the first and second elements (134, 136) into contact with the upper and lower surfaces of the recess (129, 135).

4. The valve block (100) of any previous claim, wherein the first and second seal elements (234, 236) are biased radially inwardly, so that the first and second seal elements (234, 236) engage an external surface of the shaft (216) to create a seal with the shaft (216).

5. The valve block (100) of any previous claim, further comprising third and fourth seal elements (240, 242) within the recess, wherein the third and fourth seal elements (240, 242) are biased radially inwardly, so that the third and fourth seal elements (240, 242) engage the external surface of the shaft (216) to create a seal with the shaft (216), and wherein the third and fourth seal elements (240, 242) are driven into sealing engagement with a respective portion of the recess (232) under influence of the biasing element (238).

6. The valve block (100) of any of claims 1 to 3, wherein the first and second seal elements (240, 242) are biased radially outwardly, so that the first and second seal elements engage an internal surface of the bush to create a seal with the bush (330).

7. The valve block (100) of claim 6, further comprising third and fourth seal elements (340, 342) within the recess (332), wherein the third and fourth seal elements (340, 342) are biased radially outwardly, so that the third and fourth seal elements (340, 342) engage the internal surface of the bush (330) to create a seal with the bush, and wherein the third and fourth seal elements (340, 342) are driven into sealing engagement with a respective portion of the recess (332) under influence of the biasing element.

8. The valve block (100) of claim 6 or claim 7, wherein the recess (132) is in the shaft (116), and upper and lower surfaces are defined within the recess (132).

9. The valve block (100) of claim 8, wherein the bush comprises at least one further recess (132), and at least one further seal element is located within the further recess (132), wherein the further seal element is biased radially inwardly so that the further seal element engages an external surface of the shaft (116) to create a seal with the shaft (116).

10. The valve block (100) of any of claims 1 to 5, wherein the bush comprises a top portion (128) and a bottom portion (130), and the recess (132) is defined between the top and bottom portions (128, 130) of the bush, to define an upper surface of the recess (132) on the top portion of the bush, and a lower surface of the recess on the bottom portion of the bush.

11. The valve block (100) of claim 10, wherein the shaft comprises at least one further recess (132), and at least one further seal element is located within the further recess (132), wherein the further seal element is biased radially outwardly so that the further seal element engages an internal surface of the bush to create a seal with the bush (128, 130).

12. The valve block (100) of any previous claim, wherein the bush comprises a top portion (130) and a bottom portion (128), wherein the top portion (130) and the bottom portion (128) of the bush are arranged to engage one another to limit relative axial movement of the top and bottom portions, in use.

13. The valve block (100) of any previous claim, wherein the biasing element (138) is a wave spring.

14. A method of assembling a valve block (100) for use in an exhaust gas stream, the method comprising:
providing a valve (112) pivotable between an open and a closed position;
providing a spindle (114) in communication with the valve (112), the spindle (114) comprising a shaft (116) that is rotatable within the housing, for pivoting the valve between the open and closed position;
locating the shaft (116) within a bore (118) extending within the valve block (100);
locating a bush (128, 130) within the bore (118) to encircle the shaft (116), a recess (132) being defined between the bush and the shaft (116);
**characterised by**:
locating first and second seal elements (134, 136) within the recess (132), for creating a seal between the bush (128, 130) and the shaft (116); and
locating a biasing element (138) within the recess (132), intermediate the first and second seal elements (134, 136),
wherein the biasing element (138) expands axially to apply a force to the first and second seal elements (134, 136).

15. A butterfly valve (10) comprising a housing (11) having a through bore (12), a spindle (14) crossing said through bore (15) and pivotable in said housing, and a valve disc (13) secured to said spindle (14) for closing said through bore (15), said spindle (14) protruding at one side for connection to an operating lever (17), wherein said housing (11) includes a through bearing for said spindle (14) at said one side, and said spindle (14) includes a circumferential groove (32) adjacent said bearing, and said valve (10) further comprising a sealing ring (33) engaged in said groove (32);
**characterised in that**:
the bearing (22a) comprises a radially inner part and a radially outer part defining therebetween a circumferentially extending space about said spindle (14), and **in that** the sealing ring (33) engaged in the groove is axially slidable in said space to permit said valve disc (13) to self-centre in use.

## Patentansprüche

1. Ventilblock (100) zur Verwendung in einem Abgasstrom, wobei der Ventilblock (100) Folgendes enthält:
ein Ventil (112), das zwischen einer offenen und einer geschlossenen Position bewegbar ist;
eine Spindel (114) in Verbindung mit dem Ventil (112), wobei die Spindel (114) eine Welle (116) aufweist, die in dem Ventilblock (100) drehbar ist, um das Ventil (112) zwischen der offenen und der geschlossenen Position zu bewegen;
eine Bohrung (118) innerhalb des Ventilblocks (100) zur Aufnahme der Welle (116);
eine Buchse (128, 130), die zur drehbaren Lagerung für die Welle (116) konfiguriert ist;
eine Aussparung (132), die zwischen der Buchse (128, 130) und der Welle (116) definiert ist;
**dadurch gekennzeichnet,**
**dass** erste und zweite Dichtungselemente (134, 136) innerhalb der Aussparung (132) angeordnet sind, um eine Dichtung zwischen der Buchse (128, 130) und der Welle (116) zu schaffen; und
**dass** zwischen dem ersten und dem zweiten Dichtungselement (134, 136) ein Spannelement (138) innerhalb der Aussparung (132) angeordnet ist,
wobei das Spannelement (138) derart ausgestaltet ist, dass es in Axialrichtung expandiert, um entgegengesetzte Kräfte auf das erste und das zweite Dichtungselement (134, 136) auszuüben.

2. Ventilblock (100) nach Anspruch 1, wobei die Aussparung (132) gegenüberliegende untere und obere Oberflächen (129, 135) aufweist und wobei die axiale Ausdehnung des Spannelements dazu dient, eine Dichtung mit den unteren und oberen Oberflächen (129, 135) zu bewirken.

3. Ventilblock (100) nach Anspruch 1 oder 2, wobei die axiale Ausdehnung des Spannelements (138) die ersten und zweiten Elemente (134, 136 in Kontakt mit den oberen und unteren Flächen (129, 135) der Aussparung drängt.

4. Ventilblock (100) nach einem der vorhergehenden Ansprüche, wobei die ersten und zweiten Dichtungselemente der (234, 236) radial nach innen vorgespannt sind, sodass die ersten und zweiten Dichtungselemente (234, 236) an einer äußeren Oberfläche der Welle (216) zur Anlage kommen, um eine Abdichtung mit der Welle (216) zu schaffen.

5. Ventilblock (100) nach einem der vorhergehenden Ansprüche, weiterhin umfassend dritte und vierte Dichtungselemente (240, 242) innerhalb der Aussparung, wobei die dritten und vierten Dichtungselemente der (240, 242) radial nach innen vorgespannt sind, sodass die dritten und vierten Dichtungselemente (240, 242) an der äußeren Oberfläche der Welle (216) zur Anlage kommen, um eine Dichtung mit der Welle (216) zu schaffen, und wobei die dritten und vierten Dichtungselemente (240, 242) unter dem Einfluss des Spannelements (238) in dichtende Anlage mit einem entsprechenden Teil der Aussparung (232) gedrängt werden.

6. Ventilblock (100) nach einem der Ansprüche 1 bis 3, wobei die ersten und zweiten Dichtungselemente der (240, 242) radial nach außen vorgespannt sind, sodass die ersten und zweiten Dichtungselemente an der inneren Fläche der Buchse zur Anlage kommen, um eine Dichtung mit der Buchse (330) zu schaffen.

7. Ventilblock (100) nach Anspruch 6, weiterhin umfassend dritte und vierte Dichtungselemente der (340, 342) innerhalb der Aussparung (332), wobei die dritten und vierten Dichtungselemente der (340, 342) radial nach außen vorgespannt sind, sodass die dritten und vierten Dichtungselemente der (340, 342) an der inneren Oberfläche der Buchse (330) anliegen, um mit der Buchse eine Dichtung zu schaffen, und wobei die dritten und vierten Dichtungselemente (340, 342) unter dem Einfluss des Spannelements in dichtende Anlage mit einem entsprechenden Teil der Aussparung (332) gedrängt werden.

8. Ventilblock (100) nach Anspruch 6 oder 7, wobei die Aussparung (132) in der Welle (116) ausgebildet ist und innerhalb der Aussparung (132) obere und untere Oberflächen vorgesehen sind.

9. Ventilblock (100) nach Anspruch 8, wobei die Buchse mindestens eine weitere Aussparung (132) aufweist und mindestens ein weiteres Dichtungselement in der weiteren Aussparung (132) angeordnet ist, wobei das weitere Dichtungselement radial nach innen vorgespannt ist, sodass das weitere Dichtungselement zur Anlage an einer äußeren Oberfläche der Welle (116) gelangt, um eine Dichtung mit der Welle (116) zu schaffen.

10. Ventilblock (100) nach einem der Ansprüche 1 bis 5, wobei die Buchse ein oberes Teil (128) und ein unteres Teil (130) aufweist und wobei die Aussparung (132) zwischen den oberen und unteren Teilen (128, 130) der Buchse angeordnet ist, um eine obere Oberfläche der Aussparung (132) auf dem oberen Teil der Buchse und eine untere Oberfläche der Aussparung auf dem unteren Teil der Buchse zu bilden.

11. Ventilblock (100) nach Anspruch 10, wobei die Welle mindestens eine weitere Aussparung (132) aufweist, und mindestens ein weiteres Dichtungselement innerhalb der weiteren Aussparung (132) angeordnet ist, wobei das weitere Dichtungselement radial nach außen vorgespannt ist, sodass das weitere Dichtungselement an der inneren Oberfläche der Buchse anliegt, um eine Dichtung mit der Buchse (128, 130) zu schaffen.

12. Ventilblock (100) nach einem der vorhergehenden Ansprüche, wobei die Buchse ein oberes Teil (130) und ein unteres Teil (128) aufweist, wobei das obere Teil (130) und das untere Teil (128) der Buchse derart angeordnet sind, dass sie aneinander anliegen, um im Betrieb die axiale relative Bewegung des oberen und unteren Teils zu begrenzen.

13. Ventilblock (100) nach einem der vorhergehenden Ansprüche, wobei das Spannelement (138) eine Wellenfeder ist.

14. Verfahren zum Zusammenbau eines Ventilblocks (100) zur Verwendung in einem Abgasstrom, wobei das Verfahren Folgendes umfasst:
Bereitstellung eines Ventils (112), das zwischen einer offenen und einer geschlossenen Position drehbar bzw. schwenkbar ist;
Bereitstellung einer Spindel (114) in Verbindung mit dem Ventil (112), wobei die Spindel (114) eine Welle (116) aufweist, die drehbar innerhalb des Gehäuses angeordnet ist, um das Ventil zwischen der offenen und geschlossenen Position drehen bzw. zu schwenken;
Anordnung der Welle (116) innerhalb einer Bohrung (118), die sich innerhalb des Ventilblocks (100) erstreckt;
Anordnung einer Buchse (128, 130) innerhalb der Bohrung (118), um die Welle (116) zu umgeben, wobei eine Aussparung (132) zwischen der Buchse und der Welle (116) vorgesehen ist;
**gekennzeichnet durch** folgende Verfahrensschritte:
Anordnung erster und zweiter Dichtungselemente (134, 136) innerhalb der Aussparung (132), um eine Dichtung zwischen der Buchse (128, 130) und der Welle (116) zu schaffen; und
Anordnung eines Spannelements (138) innerhalb der Aussparung (132) zwischen den ersten und zweiten Dichtungselementen (134, 136),
wobei das Spannelement (138) sich in radialer Richtung ausdehnt, um eine Kraft auf die ersten und zweiten Dichtungselemente (134, 136) auszuüben.

15. Drosselventil (10) mit einem Gehäuse (11), welches eine Durchgangsbohrung (12), eine Spindel (14), die sich durch die Durchgangsbohrung (15) hindurch erstreckt und drehbar bzw. schwenkbar in dem Gehäuse angeordnet ist, und eine Ventilscheibe (13) aufweist, die an der Spindel (14) befestigt ist, um die Durchgangsbohrung (15) zu verschließen, wobei die Spindel (14) auf einer Seite herausragt und mit einem Betätigungshebel (17) versehen ist, wobei das Gehäuse (11) auf der genannten Seite eine durchgehende Lagerung für die Spindel (14) aufweist, und die Spindel (14) nahe des Lagers mit einer Umfangsnut (32) versehen ist, und das Ventil (10) weiterhin einen Dichtungsring (33) umfasst, der in dieser Nut (32) angeordnet ist;
**dadurch gekennzeichnet,**
**dass** das Lager (22a) einen radial innen gelegenen Teil und einen radial außen gelegenen Teil umfasst, wobei dazwischen ein sich in Umfangsrichtung erstreckender Raum gebildet wird, der sich um die Spindel herum (14) erstreckt, und dass der Dichtungsring (33), der in der Nut angeordnet ist, axial in dem Raum verschiebbar ist, damit sich die Ventilscheibe (13) im Betrieb selbsttätig zentriert.

## Revendications

1. Bloc de vanne (100) destiné à être utilisé dans un flux de gaz d'échappement, ce bloc de vanne (100) comprenant :
une vanne (112) mobile entre une position ouverte et une position fermée,
une broche (114) en communication avec la vanne (112), cette broche (114) comprenant un arbre (116) mobile en rotation dans le bloc de vanne (100) pour permettre de déplacer la vanne (112) entre la position ouverte et la position fermée,
un perçage (118) s'étendant dans le bloc de vanne (100) pour positionner l'arbre (116),
une douille (128, 130) conformée pour agir en tant que palier de rotation de l'arbre (116),
un renfoncement (132) défini entre la douille (128, 130) et l'arbre (116),
**caractérisé en ce qu'**
un premier élément d'étanchéité et un second élément d'étanchéité (134, 136) sont positionnés dans le renfoncement (132) pour créer une étanchéité entre la douille (128, 130) et l'arbre (116), et
un élément de rappel (138) étant positionné dans le renfoncement (132) entre le premier élément d'étanchéité et le second élément d'étanchéité (134, 136),
l'élément de rappel (138) étant conformé pour s'étendre axialement de façon à appliquer des forces opposées sur le premier élément d'étanchéité et sur le second élément d'étanchéité (134, 136).

2. Bloc de vanne (100) conforme à la revendication 1,
dans lequel le renfoncement (132) a une surface supérieure et une surface inférieure (129, 135) opposées l'une à l'autre et l'extension axiale de l'élément de rappel sert à créer une étanchéité avec la surface supérieure et la surface inférieure (129, 135).

3. Bloc de vanne (100) conforme à la revendication 1 ou à la revendication 2,
dans lequel l'extension de l'élément de rappel (138) met à force le premier élément et le second élément (134, 136) en contact avec la surface supérieure et la surface inférieure du renfoncement (129, 135).

4. Bloc de vanne (100) conforme à l'une quelconque des revendications précédentes,
dans lequel le premier élément d'étanchéité et le second élément d'étanchéité (234, 236) sont rappelés radialement vers l'intérieur de sorte que ce premier élément d'étanchéité et ce second élément d'étanchéité (234, 236) viennent en prise avec la surface externe de l'arbre (216) pour créer une étanchéité avec l'arbre (216).

5. Bloc de vanne (100) conforme à l'une quelconque des revendications précédentes,
comprenant en outre un troisième élément d'étanchéité et un quatrième élément d'étanchéité (240, 242) situés dans le renfoncement, le troisième élément d'étanchéité et le quatrième élément d'étanchéité (240, 242) étant rappelés radialement vers l'intérieur de sorte que ce troisième élément d'étanchéité et ce quatrième élément d'étanchéité (240, 242) viennent en prise avec la surface externe de l'arbre (216) pour créer une étanchéité avec l'arbre (216), et le troisième élément d'étanchéité et le quatrième élément d'étanchéité (240, 242) étant mis en engagement d'étanchéité avec une partie respective du renfoncement (232) sous l'influence de l'élément de rappel (238).

6. Bloc de vanne (100) conforme à l'une quelconque des 1 à 3,
dans lequel le premier élément d'étanchéité et le second élément d'étanchéité (240, 242) sont rappelés radialement vers l'extérieur de sorte que ce premier élément d'étanchéité et ce second élément d'étanchéité viennent en prise avec la surface interne de la douille pour créer une étanchéité avec la douille (330).

7. Bloc de vanne (100) conforme à la revendication 6,
comprenant en outre un troisième élément d'étanchéité et un quatrième élément d'étanchéité (340, 342) situés dans le renfoncement (332), le troisième élément d'étanchéité et le quatrième élément d'étanchéité (340, 342) étant rappelés radialement vers l'extérieur de sorte que ce troisième élément d'étanchéité et ce quatrième élément d'étanchéité (340, 342) viennent en prise avec la surface interne de la douille (330) pour créer une étanchéité avec la douille, et le troisième élément d'étanchéité et le quatrième élément d'étanchéité (340, 342) étant mis en engagement d'étanchéité avec une partie respective du renfoncement (332) sous l'influence de l'élément de rappel.

8. Bloc de vanne (100) conforme à la revendication 6 ou 7,
dans lequel le renfoncement (132) est situé dans l'arbre (116) et la surface supérieure et la surface inférieure sont définies dans le renfoncement (132).

9. Bloc de vanne (100) conforme à la revendication 8,
dans lequel la douille comporte au moins un autre renfoncement (132) et au moins un autre élément d'étanchéité est positionné dans l'autre renfoncement (132), l'autre élément d'étanchéité étant rappelé radialement vers l'intérieur de sorte que cet autre élément d'étanchéité vienne en prise avec la surface externe de l'arbre (116) pour créer une étanchéité avec l'arbre (116).

10. Bloc de vanne (100) conforme à l'une quelconque des revendications 1 à 5,
dans lequel la douille comporte une partie supérieure (128) et une partie inférieure (130) et le renfoncement (132) est défini entre la partie supérieure et la partie inférieure (128, 130) de la douille pour définir une surface supérieure du renfoncement (132) sur la partie supérieure de la douille et une surface inférieure du renfoncement sur la partie inférieure de la douille.

11. Bloc de vanne (100) conforme à la revendication 10,
dans lequel l'arbre comporte au moins un autre renfoncement (132) et au moins un autre élément d'étanchéité est positionné à la partie interne de l'autre renfoncement (132), l'autre élément d'étanchéité étant rappelé radialement vers l'extérieur de sorte que cet autre élément d'étanchéité vienne en prise avec la surface interne de la douille pour créer une étanchéité avec la douille (128, 130).

12. Bloc de vanne (100) conforme à l'une quelconque des revendications précédentes,
dans lequel la douille comporte une partie supérieure (130) et une partie inférieure (128), la partie supérieure (130) et la partie inférieure (128) de la douille étant agencées pour venir en prise de façon à limiter leur mouvement axial relatif en cours d'utilisation.

13. Bloc de vanne (100) conforme à l'une quelconque des revendications précédentes,
dans lequel l'élément de rappel (138) est un ressort ondulé.

14. Procédé d'assemblage d'un bloc de vanne (100) destiné à être utilisé dans un flux de gaz d'échappement comprenant des étapes consistant à :
se procurer une vanne (112) susceptible de pivoter entre une position ouverte et une position fermée,
se procurer une broche (114) en communication avec la vanne (112), cette broche (114) comprenant un arbre (116) qui est mobile en rotation à la partie interne du boîtier pour permettre le pivotement de la vanne entre la position interne et la position fermée,
positionner l'arbre (116) dans un perçage (118) s'étendant dans le bloc de vanne (100),
positionner une douille (128, 130) dans le perçage (118) pour entourer l'arbre (116), un renfoncement (132) étant défini entre la douille et l'arbre (116),
**caractérisé par** des étapes consistant à :
positionner un premier élément d'étanchéité et un second élément d'étanchéité (134, 136) dans le renfoncement (132) pour créer une étanchéité entre la douille (128, 130) et l'arbre (116), et
positionner un élément de rappel (138) dans le renfoncement (132) entre le premier élément d'étanchéité et le second élément d'étanchéité (134, 136),
l'élément de rappel (138) s'étendant axialement pour appliquer une force sur le premier élément d'étanchéité et sur le second élément d'étanchéité (134, 136).

15. Vanne papillon (10) comprenant un boîtier (11) ayant un perçage traversant (12), une broche (14) traversant ce perçage (15) et susceptible de pivoter dans le boîtier, et un disque de vanne (13) fixé à la broche (14) pour permettre de fermer le perçage traversant (15), la broche (14) dépassant d'un côté pour permettre une connexion avec un levier opérationnel (17), le boîtier (11) ayant sur ce côté, un palier traversant pour la broche (14), la broche (14) ayant une rainure périphérique (32) adjacente au palier, et la vanne (10) comprenant en outre une bague d'étanchéité (33) en prise dans la rainure (32),
**caractérisée en ce que**
le palier (22a) comporte une partie interne radiale et une partie externe radiale définissant entre elles un espace périphérique autour de la broche (14), et la bague d'étanchéité (33) en prise dans la rainure peut glisser axialement dans cet espace pour permettre un autocentrage du disque de vanne (13) en cours d'utilisation.
